# EUROPÄISCHE PATENTANMELDUNG

(11) **EP 0 765 098 A2**
(43) Veröffentlichungstag der Anmeldung: **26.03.1997**
(21) Anmeldenummer: 96113324.6
(22) Anmeldetag: 20.08.1996
(51) Int. Cl.: H04Q 11/04, H04L 12/56

(54) **Verfahren zum Vermitteln von Schmalband- Leitungsbündeln zwischen Kommunikationssystemen über ein ATM-Kommunikationsnetz**

(30) Priorität: 19.09.1995 DE 19534755
(71) Anmelder: SIEMENS AKTIENGESELLSCHAFT, 80333 München (DE)
(72) Erfinder: Kienberger, Helmut, Dipl.-Ing., 81475 München (DE); Müller, Hans-Peter, Dipl.-Ing., 81735 München (DE)

(57) **Zusammenfassung**

Zwischen Zeitmultiplex-Kommunikationssystemen (KS) zu vermittelnde, zusammengefaßte Schmalband-Verbindungen enthaltende Leitungsbündel (LB1..4) werden in einen zellenorientierten Informationsstrom (IS) umgesetzt. Eine vorgegebene Anzahl der Leitungsbündel (LB1,2) wird über permanente virtuelle Verbindungen (PVC1,2) eines ATM-Kommunikationsnetzes (KN) vermittelt und für die Vermittlung von zusätzlichen Leitungsbündeln (LB3,4) werden vermittelte permanente virtuelle Verbindungen (SPVC1,2) im ATM-Kommunikationsnetzes (KN) aufgebaut. Die vermittelten permanenten virtuellen Verbindungen (SPVC1,2) werden in Abhängigkeit von dem Verkehrsaufkommen (VB) jeweils zwischen den Kommunikationssystemen (KS) auf- und wieder abgebaut. Durch den Einsatz des erfindungsgemäßen Verfahren werden die vermittlungstechnischen Ressourcen des ATM-Kommunikationsnetzes (KN) effizienter genutzt und die ATM-Netzvermittlungskosten reduziert.

## Beschreibung

Derzeitige, nach dem Zeitmultiplexverfahren vermittelnde Kommunikationssysteme, insbesondere private Schmalband-Fernmeldevermittlungsanlagen, sind untereinander über einzelne Schmalband-Festverbindungen oder Schmalband-Leitungsbündel verbunden. Schmalband-Verbindungen stellen insbesondere pulscodemodulierte (PCM) Verbindungen, d.h. digitalisierte Fernsprechverbindungen oder Datenverbindungen mit bis zu einer Übertragungsgeschwindigkeit von 64 kBit/s dar. Leitungsbündel werden durch Multiplexen der Nachrichten- und Signalisierungsinformationen mehrerer Schmalband-Verbindungen gebildet, wobei standardisierte Leitungsbündel 32 oder 24 Schmalband-Verbindungen bzw. Kanäle und eine Übertragungsgeschwindigkeit von 2048 kBit/s oder 1544 kBit/s aufweisen. Die einzelnen, zwischen den Kommunikationssystemen vorgesehenen Schmalband-Verbindungen oder Leitungsbündel werden über durch öffentliche oder private Netzbetreiber zur Verfügung gestellte Festverbindungen vermittelt.

Zukünftig sind für die Vermittlung bzw. Übermittlung der Nachrichten- und Signalisierungsinformationen von insbesondere Leitungsbündeln nach dem Asynchron-Transfer-Modus wirkende Kommunikationsnetze - in der Fachwelt als ATM-Kommunikationsnetze bekannt - vorgesehen. Hierzu ist im relevanten Standardisierungsgremium - ATM-Forum - vorgeschlagen worden, die Nachrichten- und Signalisierungsinformationen von Leitungsbündeln über virtuelle Festverbindungen eines ATM-Kommunikationsnetzes zu vermitteln. Gemäß diesem Standard "Circuit Emulation Service (CES)" werden die zusammengefaßten 64 kBit/s-Nachrichtenkanäle einschließlich des Signalisierungskanals, d.h. die gemultiplexten Kanäle mit einer Übertragungsgeschwindigkeit von 2048 kbit/s zellenweise über eine permanente virtuelle Verbindungen, d.h. Festverbindung eines ATM-Kommunikationsnetzes übermittelt. Die Übertragung der Signalisierungs- und Nachrichteninformationen über das ATM-Kommunikationsnetz erfolgt transparent, d.h. bezogen auf die standardisierten Protokollschichten werden die Signalisierungs- und Nachrichteninformationen gemäß den Schichten 2 und 3 transparent übertragen. Da die virtuellen Festverbindungen administrativ, d.h. über Netzmanagementeinrichtungen durch Eingabe entsprechender betriebstechnischer Anweisungen einzurichten sind, ist eine Anpassung an eine unterschiedliche Anzahl von zu vermittelnden Leitungsbündeln, verursacht durch unterschiedliches Verkehrsaufkommen innerhalb eines Tages oder eine Woche, personal- und zeitaufwendig. Hierbei ist die Größe bzw. die Anzahl der Leitungsbündel auf eine Hauptverkehrszeit abzustimmen, wodurch die Anzahl der Leitungsbündel zwischen den zeitmulitplexkonzipierten Kommunikationssystemen durch dieses Maximum bestimmt ist. Dies bedeutet maximalen Ressourcenverbrauch in dem jeweiligen ATM-Kommunikationsnetz sowie maximale Kosten für die Vermittlung der Leitungsbündel.

Die Aufgabe der Erfindung ist darin zu sehen, die Ressourcen des ATM-Kommunikationsnetzes effizienter zu nutzen und dadurch die Leitungsbündel-Vermittlungskosten zu reduzieren. Die Aufgabe wird durch die Merkmale des Anspruchs 1 gelöst.

Der wesentliche Aspekt des erfindungsgemäßen Verfahrens ist darin zu sehen, daß für die Vermittlung der Nachrichten- und Signalisierungsinformationen von Leitungsbündeln eine vorgegebene Anzahl von permanenten virtuellen Verbindungen über das ATM-Kommunikationsnetz zwischen jeweils zwei Kommunikationssystemen eingerichtet wird und in Abhängigkeit von dem gemessenen Verkehrsaufkommen in den eingerichteten permanenten virtuellen Verbindungen für die Vermittlung von weiteren Leitungsbündeln vermittelte permanente virtuelle Verbindungen - d.h. über Wählverbindungen - über das ATM-Kommunikationsnetz aufgebaut und durch zusätzliche Messungen des Verkehrsaufkommens in den aufgebauten vermittelten permanenten virtuellen Verbindungen wieder abgebaut werden, wobei die vermittelte permanente virtuelle Verbindung wieder abgebaut wird, wenn eine vorgegebene Zeitspanne - z.B. 10 Minuten - kein Verkehrsaufkommen mehr in den vermittelten permanenten virtuellen Verbindungen gemessen wird. Um den automatischen Verbindungsaufbau zu erleichtern, ist eine ATM-kommunikationsnetzspezifische Adresse vorgegeben, mit der ein fest konfiguriertes "Hotline-Ziel", d.h. das Ziel-Kommunikationssystem erreicht wird. Sowohl über die permanenten virtuellen als auch die vermittelten permanenten virtuellen Verbindungen werden die Signalisierungs- und Nachrichteninformationen der Leitungsbündel transparent übermittelt. Durch diese transparente Übermittlung, insbesondere der Signalisierungsinformationen bleibt der erhebliche Leistungsumfang insbesondere von privaten Fernmeldenebenstellenanlagen erhalten. Ein weiterer Vorteil des erfindungsgemäßen Verfahrens ist darin zu sehen, daß sowohl der personelle Aufwand für das Einrichten bzw. Ändern von permanenten virtuellen Verbindungen eingespart als auch die Vermittlungskosten für die Leitungsbündel zwischen den jeweiligen Kommunikationssystemen reduziert werden, wobei die ATM-Kommunikationsnetzressourcen lediglich in dem jeweils erforderlichen Umfang beansprucht werden.

Gemäß einer vorteilhaften Ausgestaltung des erfindungsgemäßen Verfahrens werden die Nachrichten- und Signalisierungsinformationen von zwischen Kommunikationssystemen zu vermittelnden zeitmuliplexorientierten Schmalband-Verbindungen zuerst den Leitungsbündeln zugeordnet, die über die eingerichteten permanenten virtuellen Verbindungen vermittelt werden und zu vermittelnde Nachrichten- und Signalisierungsinformationen von zusätzlichen Schmalband-Verbindungen - insbesondere in den Hauptverkehrszeiten - den Leitungsbündeln zugeordnet werden, die über vermittelte permanente virtuelle Verbindungen vermittelt werden - Anspruch 2. Diese Maßnahme stellt die effizienteste Nutzung der eingerichteten virtuellen Festverbindungen sicher.

Gemäß einer vorteilhaften Weiterbildung des erfindungsgemäßen Verfahrens wird in den Kommunikationssystemen das Verkehrsaufkommen in den Leitungsbündeln mit Hilfe einer Leitungsbündel-Monitoringroutine kontinuierlich gemessen und die Meßergebnisse werden über einen betriebstechnischen Anschluß an eine externe rechnergesteuerte Einrichtung übermittelt. Mit Hilfe einer Bewertungsroutine wird das Übersteigen des Verkehrsaufkommens über vorgegebene Werte festgestellt und jeweils eine vermittlungstechnische Aufbauinformation gebildet und zusätzlich das Unterschreiten von vorgegebenen Werten des Verkehrsaufkommens in den die vermittelten permanenten virtuellen Verbindungen vermittelnden Leitungsbündeln festgestellt und ebenfalls jeweils eine betriebstechnische Abbauinformation gebildet. Die Auf- und Abbauinformation werden an einen betriebstechnischen Anschluß des ATM-Kommunikationsnetzes übermittelt und in diesem wird bei einer übermittelten Aufbauinformation jeweils der Verbindungsaufbau zumindest einer weiteren vermittelten permanenten virtuellen Verbindung, über die jeweils ein weiteres Leitungsbündel vermittelt wird, eingeleitet und bei einer übermittelten Abbauinformation der Verbindungsabbau zumindest einer der weiteren vermittelten permanenten virtuellen Verbindungen eingeleitet.

Zur Messung des Verkehrsaufkommens wird erfindungsgemäß mit Hilfe der programmtechnisch realisierten Leitungsbündel-Monitoringroutine die Anzahl der über das jeweilige Leitungsbündel aktuell vermittelten Schmalband-Verbindungen kontinuierlich festgestellt und durch eine Meldung der externen rechnergesteuerten Einrichtung - insbesondere ein Personalcomputer - mitgeteilt. In der externen rechnergesteuerten Einrichtung wird mit Hilfe einer Bewertungsroutine das Übersteigen oder Unterschreiten vorgegebener Werte des Verkehrsaufkommens durch das Übersteigen oder Unterschreiten der mitgeteilte Anzahlen über oder unter vorgegebene Anzahlen ermittelt. Die Messung der Anzahl der über die Leitungsbündel geführten Schmalband-Verbindungen stellt die vorteilhafteste bzw. einfachste Messung des Verkehrsaufkommens in den Leitungsbündeln dar.

Der betriebstechnische Anschluß eines Kommunikationssystem ist vorteilhaft durch eine vermittlungstechnische Ereignisse meldende ACL-Schnittstelle realisiert, wobei das Verkehrsaufkommen in den Leitungsbündeln durch Ereignismeldungen angezeigt wird. Bei dieser ACL-Schnittstelle (Application Connectivity Link) werden alle im Kommunikationssystem auftretenden vermittlungstechnischen Ereignisse durch Ereignismeldungen an eine Datenverarbeitungsanlage - insbesondere einen Personalcomputer - gemeldet. Im Personalcomputer sind programmtechnisch realisierte Applikationen, beispielsweise eine automatische Anrufverteilung oder ein Telefonbuch realisiert. Im Personalcomputer entsprechend den Applikationen gebildete Einstellinformationen bzw. betriebstechnische sowie vermittlungstechnische Anweisungen werden über die ACL-Schnittstelle an das Kommunikationssystem übermittelt und die angegebenen Anweisungen ausgeführt. Eine Anweisung stellt beispielsweise "Aktivieren eines einer zusätzlichen vermittelten permanenten virtuellen Verbindung zugeordneten Leitungsbündels" dar.

Gemäß einer weiteren vorteilhaften Weiterbildung des erfindungsgemäßen Verfahren ist für die Übermittlung der Ereignismeldungen und der betriebstechnischen Information der betriebstechnische Anschluß des Kommunikationssystems und des ATM-Kommunikationsnetzes und die rechnergesteuerte Einrichtung durch ein lokales Netz verbunden. Da die betriebstechnischen und Anschlüsse und der Anschluß der rechnergesteuerten Einrichtung physikalisch gleichartig realisiert sind - z.B. V.24-Schnittstelle -, stellt die Verbindung über ein lokales Netz, vorteilhaft ein lokales Busnetz, die wirtschaftlichste Kopplung der einzelnen Komponenten dar.

Weitere vorteilhafte Ausgestaltungen des erfindungsgemäßen Verfahren sind den weiteren Ansprüchen zu entnehmen.

Im folgenden wird das erfindungsgemäße Verfahren anhand eines Blockschaltbildes und eines Diagramms näher erläutert. Dabei zeigen:
- FIG 1: zwei Kommunikationssysteme, die über ein ATM-Kommunikationsnetz verbunden sind, und
- FIG 2: in einem Diagramm beispielhaft das Verkehrsaufkommen zwischen den Kommunikationssystemen nach FIG 1.

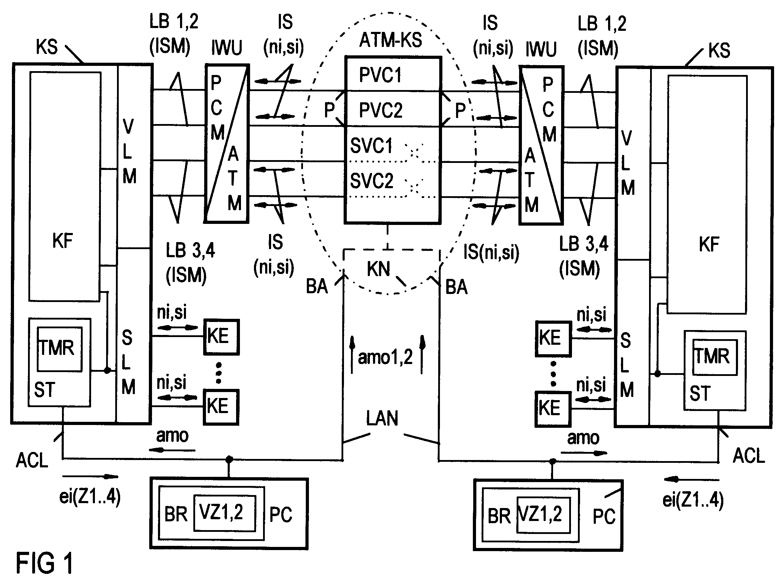

FIG 1 zeigt zwei nach dem Zeitmuliplexverfahren vermittelnde Kommunikationssysteme KS, die jeweils ein Zeitmuliplex-Koppelfeld KF sowie Teilnehmeranschlußeinrichtungen SLM aufweisen. An die Teilnehmeranschlußeinrichtungen SLM sind Kommunikationsendgeräte KE angeschlossen - jeweils durch zwei dargestellte Kommunikationsendgeräte KE angedeutet. Kommunikationsendgeräte KE stellen beispielsweise Fernsprechendgeräte, Fax-Endgeräte oder Datenübertragungseinrichtungen dar, deren Nachrichteninformationen ni mit einer Übertragungsgeschwindigkeit von 64 kBit/s und die zugeordneten Signalisierungsinformationen si beispielsweise mit einer Übertragungsgeschwindigkeit von 16 kbit/s übermittelt werden. Mit Hilfe einer jeweils im Kommunikationssystem KS angeordneten Steuerung ST, die sowohl mit den Teilnehmeranschlußeinrichtungen SLM als auch mit dem Zeitmuliplex-Koppelfeld KF verbunden ist, werden von den Kommunikationsendgeräten KE aufgebaute Verbindungen jeweils intern im jeweiligen Kommunikationssystem KS vermittelt oder sind aufgrund der übermittelten Signalisierungsinformation si an das jeweils andere Kommunikationssystem KS zu vermitteln. Die bis zu eine Nachrichten-Übertragungsgeschwindigkeit von 64 kbit/s aufweisenden Verbindungen sind den Schmalband-Verbindungen zuzurechnen. Für die "externe" Vermittlung sind in den dargestellten Kommunikationssystemen KS jeweils Verbindungsleitungs-Anschlußeinrichtungen VLM vorgesehen. In diesen Verbindungsleitungs-Anschlußeinrichtungen VLM werden die Nachrichten- und Signalisierungsinformationen ni, si von für die Vermittlung zum jeweils anderen Kommunikationssystem KS vorgesehenen Schmalband-Verbindungen zu jeweils einem ein Leitungsbünden LB1...4 repräsentierenden Informationsstrom ISM gemultiplext, wobei die Übertragungsgeschwindigkeit eines Informationsstromes ISM beispielsweise 2048 kBit/s oder 1544 kBit/s beträgt. Beide Übertragungsgeschwindigkeiten sind standardisiert und sind für die Übermittlung von 30 bzw. 24 Schmalband-Verbindungen einschließlich einer die Signalisierungsinformationen aller Schmalband-Verbindungen übermittelnden Schmalband-Verbindung vorgesehen - nicht dargestellt.

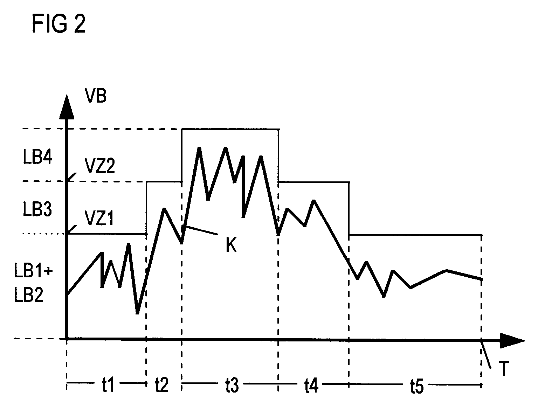

Im Ausführungsbeispiel sind vier Leitungsbündel LB1...4 von einem Kommunikationssystem KS zum anderen Kommunikationssystem KS vorgesehen. Die Auswahl von vier Leitungsbündeln LB1...4 ergibt sich aus dem in FIG 2 dargestellten Diagramm.

Das Diagramm zeigt das Verkehrsaufkommen VB - Ordinate - während eines Tages T - Abszisse. Die dargestellte Kurve K repräsentiert die über einen Tag T gemessenen Verkehrsaufkommen VB. Aufgrund des in FIG 2 gezeigten Verkehrsaufkommens VB sind für den dargestellten ersten und fünften Zeitraum t1, t5 für die zu vermittelnden Schmalband-Verbindungen zwei Leitungsbündel LB1, LB2, für den zweiten und vierten Zeitraum t2, t4 ein zusätzliches drittes Leitungsbündel LB3 und für den dritten Zeitraum t3 ein weiteres viertes Leitungsbündel LB4 erforderlich. Hierbei tritt während des ersten und fünften Zeitraums t1, t5 das niedrigste Verkehrsaufkommen VB bzw. die niedrigste Verkehrsbelastung VB und im dritten Zeitraum t3 die höchste Verkehrsbelastung VB auf. Der Zeitraum der höchsten Verkehrsbelastung VB ist in der Fachwelt als Hauptverkehrsstunde bekannt. Erfindungsgemäß werden aufgrund dieses Diagramms das erste und zweite Leitungsbündel LB1, LB2 einer Grundbelastung zugeordnet und das dritte und vierte Leitungsbündel LB wird als Zusatzbelastungen angesehen, die lediglich in den zweiten, dritten und vierten Zeiträumen temporär über ein ATM-Kommunikationsnetz KN vermittelt werden sollen.

Basierend auf den Messungen des Verkehrsaufkommens gemäß FIG 2 werden beim Ausführungsbeispiel die Nachrichten- und Signalisierungsinformationen ni, si des ersten und zweiten Leitungsbündels LB1, LB2 über zwei permanente virtuelle Verbindungen PVC1,2 eines ATM-Kommunikationsnetzes KN vermittelt. Hierzu sind die beiden Leitungsbündel LB1, LB2 jeweils auf eine Interworking-Einheit IWU geführt. In dieser werden die Nachrichten- und Signalisierugsinformationen ni,si der multiplexorientierten - bzw. PCM-multiplexorientierten Informationsströme ISM, der Leitungsbündel LB1, LB2 ATM-gemäß in Zellen gepackt und jeweils zu einem zellenorientierten Informationsstrom IS zusammengefaßt und, sofern erforderlich, dessen Übertragungsgeschwindigkeit an die eines Anschlusses des ATM-Kommunikationsnetzes KN angepaßt. Für das Ausführungsbeispiel sei angenommen, daß der zellenorientierte Informationsstrom IS mit einer Übertragungsgeschwindigkeit von zweimal 2048 kBit/s nicht angepaßt werden muß, da beispielsweise ein im ATM-Kommunikationsnetz angeordnetes ATM-Kommunikationssystem ATM-KS einen Anschluß mit einer derartigen Übertragungsgeschwindigkeit bereitstellt. Innerhalb des ATM-Kommunikationsnetzes KN werden mit Hilfe der ATM-Kommunikationssysteme ATM-KS die zellenorientierten Informationsströme IS über zwei permanente virtuelle Verbindungen PVC1,2 vermittelt bzw. übertragen. Eine permanente virtuelle Verbindung PVC1,2 wird durch entsprechende administrative Eingaben - nicht dargestellt - in den betroffenen ATM-Kommunikationssystemen ATM-KS eingerichtet, d.h. derart die Koppelfeldeinrichtungen eingestellt, daß der ankommende zellenorientierte Informationsstrom IS entsprechend der angeforderten Bitrate bzw. Übertragungsgeschwindigkeit übermittelt wird. Die Übermittlung über permanente virtuelle Verbindungen PVC1,2 in einem ATM-Kommunikationsnetz KN ist im Standardisierungsgremium "ATM-Forum" im CES-Standard (Circuit Emulation Service) beschrieben. Dort ist offenbart, daß der Anschluß zwar über einen physikalischen 155,52 mBit/s-Anschluß erfolgen kann, jedoch die Nutzung dieses Anschlusses hinsichtlich der Übertragungsgeschwindigkeit durch die angeforderte Bitrate - im Ausführungsbeispiel zweimal 2048 kBit/s - bestimmt ist. Die über das ATM-Kommunikationsnetz KN zu vermittelnden Zellen - nicht dargestellt - weisen jeweils einen Zellkopf auf, in den die ATM-kommunikationsnetzspezifische Adresse des Ursprungs- und des Ziel-Anschlußpunktes P eingefügt sind. Anhand dieser Adressen werden die Zellen des zellenorientierten Informationsstromes IS im Kommunikationsnetz KN vermittelt, wobei bei einer permanenten virtuellen Verbindung PVC1,2 ankommende Zellen eines virtuellen Kanals direkt in den durch die gespeicherte virtuelle Kanalnummer bestimmten virtuellen Kanal transferiert bzw. vermittelt werden.

Des weiteren sind das dritte und vierte Leitungsbündel LB3, LB4, die für Spitzenverkehrsbelastungen vorgesehen sind, an die Interworking- Einheit IWU geführt. In dieser werden entsprechend dem ersten und zweiten Leitungsbündel LB1, LB2 die Nachrichten- und Signalisierungsinformationen ni,si in Zellen gepackt bzw. in zellenorientierte Informationsströme IS umgesetzt und an das ATM-Kommunikationsnetz KN übermittelt.

Des weiteren weisen die Kommunikationssysteme KS jeweils eine ACL-Schnittstelle ACL (Application Connectivity Link) auf, die jeweils über eine lokales Netz LAN mit einem betriebstechnischen Anschluß BA des ATM-Kommunikationsnetzes KN und einem Personalcomputer PC verbunden ist. Der angeschlossenen Personalcomputer repräsentiert eine betriebstechnische Einrichtung eines Kommunikationssytems KS oder insbesondere eine zusätzliche Applikationen realisierende Datenverarbeitungseinrichtung, in der nicht in den Kommunikationssystemen KS vorgesehene Applikationen wie automatische Anrufverteilung oder Telefonbuch durch entsprechende Programme realisiert sind. Hierzu werden alle vermittlungstechnischen Ereignisse des Kommunikationssystems KS durch eine Ereignismeldungen ei gemeldet und umgekehrt werden im Personalcomputer entsprechend den Applikationen gebildete bzw. abgerufene betriebstechnische oder vermittlungstechnische Anweisungen amo an das Kommunikationssystem KS übermittelt, in dem die in den Anweisungen angegebenen vermittlungs- bzw. betriebstechnischen Aktionen ausgeführt werden.

Bezüglich des erfindungsgemäßen Verfahren ist in den durch Mikroprozessoren realisierten, programmgesteuerten Steuerungen ST der Kommunikationssysteme KS eine Leitungsbündel-Monitorroutine TMR vorgesehen, mit deren Hilfe die Leitungsbündel LB1..4 überwacht und das Verkehrsaufkommen VB gemessen wird. Das Verkehrsaufkommen VB wird durch die Anzahl Z1..4 der aktiven Schmalband-Verbindungen - d.h. belegten Schmalband-Verbindungen, in den jeweiligen Leitungsbündeln LB1..4 kontinuierlich - d.h. in vorgegeben Zeitabständen - gemessen. Die gemessenen Anzahlen Z1..4 werden in Ereignismeldungen ei(Z1..4) eingefügt und mit Hilfe der Steuerung ST über die ACL-Schnittstelle ACL an eine programmtechnisch realisierte Bewertungsroutine BR im Personalcomputer PC übermittelt. Mit Hilfe der Bewertungsroutine BR werden die übermittelten, gemessen Anzahlen Z1..4 gespeichert und bewertet. Zur Bewertung werden zuerst die gemessenen Verkehrsaufkommen VB der über die zwei permanenten virtuellen Verbindungen PVC1,2 vermittelten Leitungsbündel LB1,2 herangezogen. Übersteigt die Anzahl Z1.2 der aktiven Schmalband-Verbindungen in diesen Leitungsbündel LB1,2 eine vorgegebene Zeitspanne - beispielsweise 10 Minuten - eine vorgegebene, in einer Tabelle TB gespeicherte erste Anzahl VZ1, die eine beispielsweise 80%-ige Belegung der beiden Leitungsbündel LB1,2 repräsentiert, wird eine betriebstechnische Anweisung amo1 gebildet, durch die im Kommunikationssystem KS ein Verbindungsaufbau für eine vermittelte permanente Verbindung SPVC1 für die Vermittlung des dritten Leitungsbündels LB3 eingeleitet wird. Analog zu der vorhergehend beschriebenen Vorgehensweise wird bei Überschreiten der gemessenen Anzahl (Z1+Z2+Z3) über einer eine zweite vorgegebene Anzahl VZ2 eine betriebstechnische Anweisung amo1 gebildet, durch die im ATM-Kommunikationssystem ATM-KS der Verbindungsaufbau einer zweiten vermittelten permanenten virtuellen Verbindung SPVC2, über die das vierte Leitungsbündel LB4 vermittelt wird, eingeleitet wird. In der FIG 2 ist die Zuschaltung des dritten und vierten Leitungsbündels LB3,4 durch die angegebenen Anzahlen VZ1,2 in der Ordinate dargestellt. Dies bedeutet, daß das Verkehrsaufkommen VB im ersten und fünften Zeitraum t2,5 durch die zwei über die permanenten virtuellen Verbindungen PVC1,2 vermittelten Leitungsbündel LB1,2, im zweiten und vierten Zeitraum t2,4 zusätzlich durch das dritte, über die erste vermittelte permanente virtuelle Verbindung SPVC1 vermittelte Leitungsbündel LB3 und im vierten Zeitraum t4 zusätzlich durch das vierte, über die zweite vermittelte permanente virtuelle Verbindung SPVC2 vermittelte Leitungsbündel LB4 bewältigt wird, wobei die beiden vermittelten permanente virtuellen Verbindungen SPVC1,2 in den jeweiligen Zeiträumen t2..4 aufgebaut bleiben.

Die aufgebauten vermittelten permanenten virtuellen Verbindungen SPVC1,2 werden in Abhängigkeit von dem gemessenen Verkehrsaufkommen VB wieder abgebaut. Dies bedeutet, daß das Verkehrsaufkommen VB, d.h. die Anzahl Z1..4 der aktiven Schmalband-Verbindung unter eine vorgegebene Anzahl VZ1,2 gefallen ist, bei der jeweils sichergestellt ist, daß in dem abzubauenden Leitungsbündel LB3,4 kein Verkehrsaufkommen VB mehr auftritt. Bei drei vermittelnden Leitungsbündeln LB1..3 und jeweils 30 Schmalband-Verbindungen je Leitungsbündel LB1..4 wird die das dritte Leitungsbündel LB3 vermittelnde, erste permanente virtuelle Verbindung SPVC1 abgebaut, wenn die gemessene Anzahl Z1..3 von aktiven Schmalband-Verbindungen unter die vorgegebene erste Anzahl VZ1 von 80% von 60 aktiven Schmalband-Verbindungen, d.h. 48 fällt. Hierbei ist durch die Kommunikationssysteme KS sicherzustellen, daß diese 48 Schmalband-Verbindungen über das erste und zweite Leitungsbündel LB1,2 vermittelt werden. Gegebenenfalls sind einzelne Schmalband-Verbindungen umzurangieren. Die Belegung der Leitungsbündel LB1..4 mit Schmalband-Verbindungen ist, um die vermittlungstechnischen Ressourcen des ATM-Kommunikationsnetzes KN besser nutzen, derart vorzunehmen, daß Schmalband-Verbindungen zuerst die über die permanenten virtuellen Verbindungen PVC1,2 vermittelten Leitungsbündel LB1,2 und zusätzliche Schmalband-Verbindungen über die jeweils über die vermittelten permanenten virtuellen Verbindungen SPVC1,2 vermittelten Leitungsbündel LB3,4 vermittelt werden. Über freiwerdende oder freie Schmalband-Verbindungen der ersten beiden Leitungsbündel LB1,2 sind folglich vorrangig die Schmalband-Verbindungen zu vermitteln. Die vermittelten permanenten virtuellen Verbindungen SPVC1,2 werden durch eine in der Bewertungsroutine BR entsprechend gebildete betriebstechnische Anweisung amo2, die an das ATM-Kommunikationssystem ATM-KS übermittelt wird, abgebaut.

Durch das temporäre Zuschalten des dritten und vierten Leitungsbündels LB3, LB4 über vermittelte permanente virtuelle Verbindungen SVPC2,3 in Zeiträumen t2...t4 mit höherer Verkehrsbelastung VB können zwei über permanente virtuelle Verbindungen PVC1,2 geschaltete Leitungsbündel LB3, LB4 durch vermittelte permanente virtuelle Verbindung SPVC1,2 ersetzt werden, wodurch eine erhebliche Gebührenreduzierung bewirkt wird.

## Patentansprüche

1. Verfahren zum Vermitteln von zeitmultiplexorientierten Leitungsbündeln (LB1..4) zwischen zeitmultiplexkonzipierten Kommunkationssystemen (KS)
- bei dem zeitmultiplexorientierte Leitungsbündel (LB1..4) repräsentierende Informationsströme (ISM), die durch gemultiplexte Nachrichten- und Signalisierungsinformationen (ni,si) von Schmalband-Verbindungen gebildet sind, in einen zellenorientierten, ATM-konformen Informationsstrom (IS) umgesetzt und an ein ATM-Kommunikationsnetz (KN) übermittelt werden,
- in dem die Signalisierungs- und Nachrichteninformationen (ni,si) der Leitungsbündel (LB1..4) transparent über permanente virtuelle Verbindungen (PVC1,2) und über vermittelte permanente virtuelle Verbindungen (SPVC1,2) vermittelt werden,
- wobei für die Vermittlung einer vorgegebenen Anzahl von Leitungsbündeln (LB1,2) eine vorgegebene Anzahl von permanenten virtuellen Verbindungen (PVC) über das ATM-Kommunikationsnetz (KN) zwischen den jeweiligen Kommunikationssystemen (KS) eingerichtet ist, und
- das Verkehrsaufkommen (VB) in der vorgegebene Anzahl von Leitungsbündeln (LB1,2) gemessen und in Abhängigkeit von den Meßergebnissen (Z1..4) für die Vermittlung von Informationsströmen (IS) weitere Leitungsbündel (LB3,4) vermittelnde, vermittelte permanente virtuelle Verbindungen (SPVC1,2) über das ATM-Kommunikationsnetz (KN) aufgebaut werden, und
- das Verkehrsaufkommen (VB) zusätzlich in den aufgebauten vermittelten permanenten virtuellen Verbindungen (SPVC1,2) gemessen und in Abhängigkeit von den Meßergebnissen (Z3,4) wieder abgebaut werden.

2. Verfahren nach Anspruch 1, dadurch **gekennzeichnet**, daß in den Kommunikationssystemen (KS) die Nachrichten- und Signalisierungsinformationen (ni,si) von zwischen Kommunikationssystemen (KS) zu vermittelnden Schmalband-Verbindungen zuerst den Leitungsbündeln (LB1,2) zugeordnet werden, die über die eingerichteten permanenten virtuellen Verbindungen (PVC1,2) vermittelt werden und Nachrichten- und Signalisierungsinformationen (ni,si) von zusätzlich zu vermittelnden Schmalband-Verbindungen den Leitungsbündeln (LB3,4) zugeordnet werden, die über aufgebaute vermittelte permanente virtuelle Verbindungen (SPVC1,2) vermittelt werden.

3. Verfahren nach Anspruch 1 oder 2, dadurch **gekennzeichnet**,
- daß in den Kommunikationssystemen (KS) das Verkehrsaufkommen (VB) in den Leitungsbündeln (LB1..4) mit Hilfe einer Leitungsbündel-Monitoringroutine (TMR) kontinuierlich gemessen und die Meßergebnisse (Z1..4) über einen betriebstechnischen Anschluß (ACL) an eine externe rechnergesteuerte Einrichtung (PC) übermittelt werden,
- in der mit Hilfe einer Bewertungsroutine (BR)
-- das Übersteigen des Verkehrsaufkommens (VB) über vorgegebene Werte (VZ1,2) festgestellt und jeweils eine vermittlungstechnische Aufbauinformation (oam1) gebildet und
-- das Unterschreiten der vorgebenden Werten (VZ1,2) des Verkehrsaufkommens (VB) in den über vermittelte permanente virtuelle Verbindungen (SPVC1,2) vermittelte Leitungsbündeln (LB3,4) festgestellt und jeweils eine betriebstechnische Abbauinformation (oam2) gebildet wird, sowie an einen betriebstechnischen Anschluß (BA) des ATM-Kommunikationsnetzes (KN) übermittelt werden, und
- daß im ATM-Kommunikationsnetz (KN)
-- bei einer übermittelten Aufbauinformation (oam1) jeweils der Verbindungsaufbau zumindest einer weiteren vermittelten permanenten virtuellen Verbindung (SPVC3,4), über die jeweils ein weiteres Leitungsbündel (LB3,4) vermittelt wird, eingeleitet wird und
-- bei einer übermittelten Abbauinformation (oam2) der Verbindungsabbau zumindest einer weiteren vermittelten permanenten virtuellen Verbindung (SPVC3,4), über die jeweils ein weiteres Leitungsbündel (LB3,4) vermittelt wird, eingeleitet wird.

4. Verfahren nach Anspruch 3, dadurch **gekennzeichnet**, daß in den Kommunikationssystemen (KS) zur Messung des Verkehrsaufkommens (VB) mit Hilfe einer programmtechnisch realisierten Leitungsbündel-Monitoringroutine (TMR) die Anzahl der über das jeweilige Leitungsbündel (LB1..4) aktuell vermittelten Schmalband-Verbindungen kontinuierlich festgestellt und durch eine Meldung (ei) der externen rechnergesteuerten Einrichtung (PC) mitgeteilt wird, und daß in der externen rechnergesteuerten Einrichtung (PC) mit Hilfe einer Bewertungsroutine (BR) das Übersteigen oder Unterschreiten vorgegebener Werte (VZ1,2) des Verkehrsaufkommens (VB) durch das Übersteigen oder Unterschreiten der mitgeteilte Anzahlen (Z1..4) über oder unter vorgegebene Anzahlen (VZ1,2) ermittelt wird.

5. Verfahren nach Anspruch 3 oder 4, dadurch **gekennzeichnet**, daß der betriebstechnische Anschluß (BA) eines Kommunikationssystem (KS) durch eine vermittlungstechnische Ereignisse meldende ACL-Schnittstelle (ACL) realisiert ist, wobei das Verkehrsaufkommen (VB) in den Leitungsbündeln (LB1..4) im Kommunikationssystem (KS) mit Hilfe einer Leitungsbündel-Monitorroutine (TMR) gemessen und durch Ereignismeldungen (ei(Z1..4)) angezeigt wird.

6. Verfahren nach einem der Ansprüche 3 bis 5, dadurch **gekennzeichnet**, daß die für die Übermittlung der Ereignismeldungen (ei(Z1..4) und der betriebstechnischen Information (amo1,2) der betriebstechnische Anschluß (BA,ACL) des Kommunikationssystems (KS) und des ATM-Kommunikationsnetzes (KN) und die rechnergesteuerte Einrichtung (PC) durch ein lokales Netz (LAN) verbunden sind.

7. Verfahren nach einem der Ansprüche 3 bis 6, dadurch **gekennzeichnet**, daß in einem die rechnergesteuerte Einrichtung (PC) realisierenden Personalcomputer (PC) die Bewertungsroutine (BR) programmtechnisch realisiert ist.

8. Verfahren nach einem der vorhergehenden Ansprüche, dadurch **gekennzeichnet**, daß ein eine Grundbelastung repräsentierendes Verkehrsaufkommen (VB) jeweils durch die Anzahl von zwischen zwei zeitmultiplexkonzipierten Kommunikationssystemen (KS) zu vermittelnden Leitungsbündel (LB1,2) in verkehrsschwachen Zeiträumen (t1,t2) bestimmt ist, und daß diese Leitungsbündel (LB1,2) über permanente virtuelle Verbindungen (PVC1,2) des ATM-Kommunikationsnetzes (KN) vermittelt werden.

9. Verfahren nach einem der vorhergehenden Ansprüche, dadurch **gekennzeichnet**, daß die Grundbelastung übersteigende Verkehrsaufkommen (VB) jeweils durch eine zusätzliche Anzahl von zwischen zwei zeitmultiplexkonzipierten Kommunikationssystemen (KS) zu vermittelnden Leitungsbündeln (LB1,2) in verkehrsstärkeren Zeiträumen (t3..5) bestimmt sind, und daß diese Leitungsbündel (LB3,4) über aufgebaute, vermittelte permanente virtuelle Verbindungen (SPVC1,2) des ATM-Kommunikationsnetzes (KN) vermittelt werden.

10. Verfahren nach einem der vorhergehenden Ansprüche, dadurch **gekennzeichnet**, daß mit Hilfe einer Interworking-Einheit (IWU) die Nachrichten- und Signalisierungsinformationen (ni, si) der Leitungsbündel (LB1..4) für die Vermittlung über permanente oder vermittelte permanente virtuelle Verbindungen (PVC1,2; SVC1,2) ATM-konform in zellenorientierten Informationsströme (IS) umgesetzt werden und umgekehrt die zellenorientierten Informationsströme (IS) der permanenten virtuellen Verbindungen (PVC1,2) oder vermittelten permanenten virtuellen Verbindungen (SPVC1,2) entpackt sowie die zeitmultiplexorientierten Nachrichten- und Signalisierungsinformationen (ni, si) den jeweiligen Leitungsbündel (LB1..4) zugeordnet werden.

11. Verfahren nach Anspruch 10, dadurch **gekennzeichnet**, daß die zellenorientierten Informationsströme (IS) mehrerer Leitungsbündel (LB1..4) zusammengefaßt und über permanente oder vermittelte permanente virtuelle Verbindungen das ATM-Kommunikationsnetzes (KN) vermittelt werden.

12. Verfahren nach Anspruch 10 oder 11, dadurch **gekennzeichnet**, daß die Interworking-Einheiten (IWU) in ATM-Kommunikationssystemen (ATM-KS) oder zwischen den Kommunikationssystemen (KS) und dem ATM-Kommunikationsnetz (KN) realisiert ist.

13. Verfahren nach einem der vorhergehenden Ansprüche, dadurch **gekennzeichnet**, daß die Leitungsbündel (LB1..4) eine standardisierte Übertragungsgeschwindigkeit von 2048 kbit/s oder 1544 kbit/s aufweisen.

14. Verfahren nach einem der vorhergehenden Ansprüche, dadurch **gekennzeichnet**, daß den ATM-Kommunikationsnetzen (KN) im Rahmen eines Verbindungsaufbaus einer permanenten oder vermittelten permanenten virtuellen Verbindung (PVC1,2,SPVC1,2) der Umfang der zu vermittelnden, zellenorientierten Informationsströme (IS) in einer betriebstechnischen Anweisung (amo) durch Bitraten angezeigt wird.

15. Verfahren nach einem der vorhergehenden Ansprüche, dadurch **gekennzeichnet**, daß die vermittelten permanenten virtuellen Verbindungen (SPVC1,2) zum jeweiligen weiteren Kommunikationssystem (KS) jeweils mit Hilfe einer vorgegebenen, ATM-kommunikationsnetzspezifischen Adresse aufgebaut werden.
